(19) Europäisches Patentamt
European Patent Office
Office européen des brevets

(11) **EP 3 093 776 A1**

(12) **EUROPEAN PATENT APPLICATION**

(43) Date of publication:
**16.11.2016 Bulletin 2016/46**

(51) Int Cl.:
***G06F 17/30*** *(2006.01)*

(21) Application number: **15305719.5**

(22) Date of filing: **13.05.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
• **Neumann, Christoph**
**35576 Cesson Sévigné (FR)**
• **Heen, Olivier**
**35576 Cesson Sévigné (FR)**
• **Maurice, Clémentine**
**35576 Cesson Sévigné (FR)**

(74) Representative: **Browaeys, Jean-Philippe**
**TECHNICOLOR**
**1-5, rue Jeanne d'Arc**
**92130 Issy-les-Moulineaux (FR)**

(54) **DEVICE AND METHOD FOR RECORD LINKAGE**

(57)    A method of and a server device (120) for record linkage. A processor (121) finds (S20) in memory (122) for the device (120) a first record and a second record having identical password equivalent values, sends (S22), via a communications interface (123), a notification to a client device (110), the notification comprising a token for the first record, the notification inviting the user to confirm a link between the first record and the second record, receives (S24), via the communications interface (123) and through a service linked to the second record, the token for the first record, verifies (S25) that the token received matches the token sent, and, in case of positive verification, links (S26) the first record and the second record.

Figure 2

**Description**

TECHNICAL FIELD

The present disclosure relates generally to computer systems and in particular to providing software code for execution to a client.

BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

According to Wikipedia, Record Linkage "refers to the task of finding records in a data set that refer to the same entity across different data sources (e.g., data files, books, websites, databases). Record linkage is necessary when joining data sets based on entities that may or may not share a common identifier."

Record linkage is of importance in different contexts.

It can be useful to merge databases, e.g. merging the customer databases of companies A and B once company A has acquired company B.

It can also be useful to clean up a database where entities (e.g. users and customers) have multiple records. This may for example happen in case of typos in the user name that may lead John Smith to have two records, one for John Smith and another for Jonn Smith.

The linkage may be deterministic, using a clearly defined and unique identifier (e.g. the social security number). In other cases however the linking is probabilistic. In this case a wider set of features (e.g. birth date, name, ...) is used and a probability is calculated that two records refer indeed to the same person or entity. The records may then be joined if the probability is sufficiently high.

It is well known that entries may comprise passwords. It is also known that databases of accounts and passwords are regularly stolen from account providers. Therefore the passwords stored in these databases must be protected. Several techniques exist. Good descriptions of password storage good practices are given by John Steven and Jim Manico in "Password Storage Cheat Sheet", [https://www.owasp.org/index.php/Password_Storage_Cheat_Sheet] and by Defuse Security in "Salted Password Hashing - Doing it Right", [https://crackstation.net/hashing-security.htm].

A short overview of password storage policies is given below:

- **Clear text passwords:** The password pwd is stored in clear text, which offers no protection at all. While not recommended at all and largely vulnerable, many account providers and databases still use this technique to store passwords.
- **Encrypted passwords:** An encrypted version, enc(pwd), of the password is stored. The key used for the encryption is stored elsewhere and must be protected. Not recommended from a security perspective.
- **Hashed passwords:** A hashed version, hash(pwd), of the password is stored. Not recommended from a security perspective.
- **Salted hashed passwords:** Each password is augmented (e.g. prefixed) with a random string (the salt) before being hashed: hash(salt.pwd). A different salt is used for each record. The salt might be stored in clear text next to the hash: salt.hash(salt.pwd). In this case the salt does not need to be brute-forced during password verification. Recommended from a security perspective.

By introducing the salt an attacker must spend an enormous amount of time to break a single password. The attacker must brute-force/dictionary-attack the password AND the salt which renders the number of guesses prohibitive. Further, two passwords entries in the same database cannot be compared one with another.

As can be expected, users often reuse passwords between sites and accounts, which means that passwords can be a link between different records. The problem of password reuse has been studied by D. Florencio and C. Herley in "A Large-Scale Study of Web Password Habits" and by A. Das et al. in "The Tangled Web of Password Reuse". Both show that the reuse of the same or a similar password is a predominant practice for end-users; in particular, "The Tangled Web" studies how users transform their password for different online accounts. Both papers focus on an attacker breaking passwords and for example "The Tangled Web" provides a password guessing algorithm based on the observed user behavior.

Some account providers offer the possibility to their users to merge multiple accounts. For example, the EDAS submission system will ask the user John Doe, if the account names john.doe@company1.com and john.doe@company2.com both belong to him and offer to merge these accounts. Record linkage is used to detect the links between the accounts. Typically, the system compares names using similarities based on metrics such as the Jaro-Winkler distance or the Levenshtein distance. The drawback of such a method is that it fails to link accounts that have very different names: e.g. john.doe@company1.com and 0655442366@telco.com.

It will be appreciated that it is desired to have a solution that overcomes at least part of the prior art problems related to record linkage. The present principles provide such a solution.

SUMMARY OF DISCLOSURE

In a first aspect, the present principles are directed to a method of record linkage. A processor finds in memory a first record and a second record having identical password equivalent values, sends, via a communications interface and through a service associated with the first record, a notification to a client device, the notification comprising a token for the first record, the notification inviting the user to confirm a link between the first record and the second record, receives, via the communications interface and through a service associated with the second record, the token for the first record, verifies that the token received matches the token sent, and, in case of positive verification, links the first record and the second record.

Various embodiments of the first aspect include:

* That the processor further calculates a similarity metric between an identifier of the first record and an identifier of the second record, and sends the notification only in case the similarity metric satisfies a threshold value.
  In some embodiments, it may be advantageous that the similarity metric is a normalized similarity metric, such as a Jaro-Winkler distance.
  In some embodiments, it may be advantageous that the distance metric is based on a Levenshtein distance.
* That at least one service is email.
* That the notification comprises no information about the second record.

In a second aspect, the present principles are directed to a server device for record linkage. The server device comprises memory storing records linked to users, each record having at least one identifier of a user and a password equivalent value and a processor configured to find in the memory a first record and a second record having identical password equivalent values, send, via a communications interface and through a service associated with the first record, a notification to a client device, the notification comprising a token for the first record, the notification inviting the user to confirm a link between the first record and the second record, receive, via the communications interface and through a service linked to the second record, the token for the first record, verify that the token received matches the token sent, and, in case of positive verification, link the first record and the second record.

Various embodiments of the second aspect include:

* That the processor is further configured to calculate a similarity metric between an identifier of the first record and an identifier of the second record, and to send the notification only in case the similarity metric satisfies a threshold value.
  In some embodiments, it may be advantageous that the similarity metric is a normalized similarity metric, such as a Jaro-Winkler distance.
  In some embodiments, it may be advantageous that the distance metric is based on a Levenshtein distance.
* That at least one service is email.
* That the notification comprises no information about the second record.

In a third aspect, the present principles are directed to a computer program comprising program code instructions executable by a processor for implementing the steps of a method according to the first aspect.

In a fourth aspect, the present principles are directed to a computer program product which is stored on a non-transitory computer readable medium and comprises program code instructions executable by a processor for implementing the steps of a method according to the first aspect.

BRIEF DESCRIPTION OF DRAWINGS

Features of the present principles will now be described, by way of nonlimiting example, with reference to the accompanying drawings, in which

Figure 1 illustrates a system implementing the present principles; and
Figure 2 illustrates a method for record linkage according to the present principles.

DESCRIPTION OF EMBODIMENTS

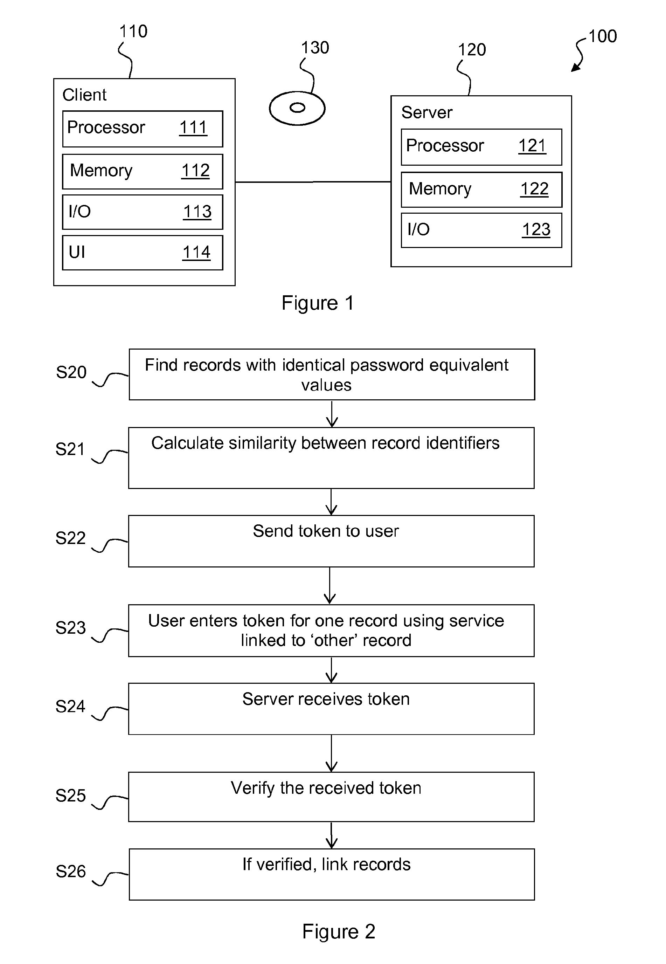

Figure 1 illustrates a system 100 implementing the present principles. The system 100 comprises a client 110 and a server 120. Although only illustrated for some of the devices, each device 110, 120 comprises at least one hardware processing unit ("processor") 111, 121, memory 112, 122 and at least one communications interface 113, 123 configured to communicate with the other device. The memory 122 of the server can be both internal and external and is configured to store a plurality of records, each record comprising an identifier and a password equivalent value. At least the client 110 comprises a user interface ("UI") 114. The skilled person will appreciate that the illustrated devices are very simplified for reasons of clarity and that real devices in addition would comprise features such as internal connections and power supplies. A non-transitory storage medium 130 stores instructions that, when executed by a processor, perform the method for record linkage described hereinafter.

A password equivalent value is the output of a unique function f(pwd) applied to a plaintext password pwd. f(pwd) is a function in its strict sense, meaning that each plaintext password corresponds to exactly one password equivalent value. The function can be null, in which case the password equivalent value is equal to the plaintext password pwd. With this definition, in addition to plaintext passwords, the password equivalent value encompasses unsalted hash values such as SHA-1 (pwd), hash values with a fixed salt such as SHA-1 (pwd||"0xdeadbeef") and unsalted encrypted values such as 3DES(pwd; SA), where SA is a secret key.

Figure 2 illustrates a method for record linkage according to the present principles.

In step S20, the processor 121 of the server 120 compares password equivalent values for the records in the memory 122 to find records with identical password equivalent values, record_A and record_B. In various embodiments, it can be advantageous that the search focuses on rare password equivalent values.

In step S21, the processor 121 determines a similarity metric between the identifiers of the records that share a password equivalent value. The similarity metric can be measured using string metrics such as the Levenshtein distance and the Jaro-Winkler distance. In various embodiments, the similarity is measured using a normalized distance, which is the case for e.g. the Jaro-Winkler distance, since this makes it easier to set threshold values. The Levenshtein distance can also be made into a normalized similarity metric as follows:

$$\text{similarity metric} = 1 - \text{Levenshtein distance/length of longest identifier.}$$

In case the similarity is below a certain threshold, such as for example if the Jaro-Winkler distance is below 0.3, which means that the identifiers are not similar (since a Jaro-Winkler distance of 1 is a perfect match and a distance of 0 is no similarity), the processor 121 sends, in step S22, via the communications interface 123 a notification to the user linked to at least one of the identifiers. The notification informs the user that a possible link has been made between two (or more) records and that the user may confirm the link between the records. To this end, the notification comprises a token, e.g. a one-time random value, per record: e.g. token_A and token_B. In many embodiments, it can be important that details about a record are not disclosed to the possibly different user of the other record. This is to avoid revealing such details in case the users are different. Revealing such details when users are different would reveal the email and the password to the other user. The notification may be sent by email or by showing the notification to the user when the user has logged on to a service associated with the record in question.

In step S23, a user enters the token received for one record using a service associated with the other record. For example, the user can send a mail message comprising token_A from an email address linked to record B or enter token_A when logged on to a service using the identifier of record B. It is noted that the user can use the same client device 110 to receive the notification and to provide the token to the server 120, but the user may also use different client devices.

In step S24, the processor 121 receives the token for one record using the service for the other record via the communications interface 123.

In step S25, the processor 121 verifies that the received token corresponds to the token sent to the other record.

If these tokens match, in step S26 the processor 121 links the records.

It will be appreciated that in particular step S21 can be omitted, in which case notifications are sent whenever the password equivalent values are identical regardless of the similarity of the identifiers.

It will thus be appreciated that the present principles provide a solution for record linkage that, at least in certain cases, can improve on the prior art code execution solutions.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

**Claims**

1. A method of record linkage comprising at processor (121) of a server device (120):

   - finding (S20) in memory (122) for the server device (120) a first record and a second record having identical password equivalent values;
   - sending (S22), via a communications interface (123) and through a service associated with the first record, a notification to a client device (110), the notification comprising a token for the first record, the notification inviting the user to confirm a link between the first record and the second record;
   - receiving (S24), via the communications interface (123) and through a service associated with the second record, the token for the first record;
   - verifying (S25) that the token received matches the token sent; and
   - in case of positive verification, linking (S26) the first record and the second record.

2. The method of claim 1, further comprising calculating (S21) a similarity metric between an identifier of the first record and an identifier of the second record, wherein the notification is sent only in case the similarity metric satisfies a threshold value.

3. The method of claim 2, wherein the similarity metric is a normalized similarity metric.

4. The method of claim 3, wherein the similarity metric is a Jaro-Winkler distance.

5. The method of claim 2, wherein the similarity metric is based on a Levenshtein distance.

6. The method of claim 1, wherein at least one service is email.

7. The method of claim 1, wherein the notification comprises no information about the second record.

8. A server device (120) for record linkage, the server device (120) comprising:

   - memory (122) storing records linked to users, each record having at least one identifier of a user and a password equivalent value;
   - a processor (121) configured to:

     - find in the memory (122) a first record and a second record having identical password equivalent values;
     - send, via a communications interface (123) and through a service associated with the first record, a notification to a client device (110), the notification comprising a token for the first record, the notification inviting the user to confirm a link between the first record and the second record;
     - receiving, via the communications interface (123) and through a service linked to the second record, the token for the first record;
     - verifying that the token received matches the token sent; and
     - in case of positive verification, linking the first record and the second record.

9. The server device of claim 8, wherein the processor is further configured to calculate a distance metric between an identifier of the first record and an identifier of the second record, and to send the notification only in case the distance metric satisfies a threshold value.

10. The server device of claim 9, wherein the similarity metric is a normalized similarity metric.

11. The server device of claim 10, wherein the similarity metric is a Jaro-Winkler distance.

12. The server device of claim 9, wherein the similarity metric is based on a Levenshtein distance.

13. The server device of claim 8, wherein at least one service is email.

14. Computer program comprising program code instructions executable by a processor for implementing the steps of a method according to at least one of claims 1 to 7.

15. Computer program product which is stored on a non-transitory computer readable medium and comprises program code instructions executable by a processor for implementing the steps of a method according to at least one of claims 1 to 7.

110

Client

| Processor | 111 |
| Memory | 112 |
| I/O | 113 |
| UI | 114 |

130

120

100

Server

| Processor | 121 |
| Memory | 122 |
| I/O | 123 |

Figure 1

S20 — Find records with identical password equivalent values

S21 — Calculate similarity between record identifiers

S22 — Send token to user

S23 — User enters token for one record using service linked to 'other' record

S24 — Server receives token

S25 — Verify the received token

S26 — If verified, link records

Figure 2

Europäisches
Patentamt

European
Patent Office

Office européen
des brevets

# EUROPEAN SEARCH REPORT

Application Number

EP 15 30 5719

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PETER CHRISTEN: "Development and user experiences of an open source data cleaning, deduplication and record linkage system", ACM SIGKDD EXPLORATIONS NEWSLETTER, vol. 11, no. 1, 16 November 2009 (2009-11-16), page 39, XP055234446, ISSN: 1931-0145, DOI: 10.1145/1656274.1656282 * abstract * * page 40, left-hand column, line 38 - right-hand column, line 20 * * page 40, right-hand column, line 37 - line 55 * * page 41, left-hand column, line 1 - line 18 * * page 45, left-hand column, line 13 - line 38 * * page 48, left-hand column, line 1 - line 15 * ----- | 1-15 | INV. G06F17/30 |
| X | Kevin M Campbell: "Rule Your Data with The Link King (a SAS/AF application for record linkage and unduplication)", , 1 January 2005 (2005-01-01), pages 1-9, XP055234463, Retrieved from the Internet: URL:http://www.lexjansen.com/pnwsug/2004/LinkKing.pdf [retrieved on 2015-12-08] * abstract * * page 1, line 25 - page 2, line 16 * * page 3, line 14 - line 36 * * page 6, line 15 - line 24 * ----- -/-- | 1-15 | **TECHNICAL FIELDS SEARCHED (IPC)** G06F |

The present search report has been drawn up for all claims

| Place of search | Date of completion of the search | Examiner |
|---|---|---|
| Berlin | 9 December 2015 | Pose Rodríguez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 15 30 5719

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | William E Winkler: "Record Linkage Software and Methods for Merging Administrative Lists", <br> , <br> 1 March 2001 (2001-03-01), pages 1-11, XP055234459, <br> Retrieved from the Internet: <br> URL:https://www.vrdc.cornell.edu/info7470/2011/Readings/rr2001-03.pdf <br> [retrieved on 2015-12-08] <br> * abstract * <br> * page 1, line 28 - line 33 * <br> * page 6, line 6 - page 7, line 17 * <br> ----- | 1-15 | |
| A | "Secure Session Management", <br> Sc. (Tech, <br> 30 June 2011 (2011-06-30), XP055234431, <br> Retrieved from the Internet: <br> URL:http://nordsecmob.aalto.fi/en/publications/theses_2011/thesis_nazmul.pdf <br> [retrieved on 2015-12-07] <br> * page 6, line 3 - line 17 * <br> * page 54, line 11 - line 30 * <br> ----- | 1,8,15 | |
| A | "SAML 2.0 Session Token Profile Version 1.0", <br> , <br> 23 November 2011 (2011-11-23), XP055234430, <br> Retrieved from the Internet: <br> URL:http://docs.oasis-open.org/security/saml/Post2.0/saml-session-token/v1.0/saml-session-token-v1.0.pdf <br> [retrieved on 2015-12-08] <br> * Section 3.1 * <br> * Section 3.2 * <br> ----- <br> -/-- | 1,8,15 | TECHNICAL FIELDS SEARCHED (IPC) |

The present search report has been drawn up for all claims

| Place of search | Date of completion of the search | Examiner |
|---|---|---|
| Berlin | 9 December 2015 | Pose Rodríguez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

EP 3 093 776 A1

| | Europäisches Patentamt European Patent Office Office européen des brevets | **EUROPEAN SEARCH REPORT** | Application Number EP 15 30 5719 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | William E Yancey: "Evaluating String Comparator Performance for Record Linkage Evaluating String Comparator Performance for Record Linkage", RESEARCH REPORT SERIES (Statistics #2005-05), 9 June 2005 (2005-06-09), pages 1-42, XP055234495, Retrieved from the Internet: URL:https://www.census.gov/srd/papers/pdf/rrs2005-05.pdf [retrieved on 2015-12-08] * Section 2.1 * * Section 2.2 * ----- | 4,5,11, 12 | |

TECHNICAL FIELDS SEARCHED (IPC)

The present search report has been drawn up for all claims

| Place of search | Date of completion of the search | Examiner |
|---|---|---|
| Berlin | 9 December 2015 | Pose Rodríguez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)